Europäisches Patentamt

European Patent Office

Office européen des brevets

(11) Veröffentlichungsnummer: **0 304 851 B1**

(19)

(12) **EUROPÄISCHE PATENTSCHRIFT**

(45) Veröffentlichungstag der Patentschrift: **03.11.93**

(21) Anmeldenummer: **88113654.3**

(22) Anmeldetag: **23.08.88**

(51) Int. Cl.⁵: **C01G 37/027**

(54) Verfahren zur Herstellung von modifiziertem, ferromagnetischem Chromdioxid.

(30) Priorität: **26.08.87 DE 3728453**

(43) Veröffentlichungstag der Anmeldung:
**01.03.89 Patentblatt 89/09**

(45) Bekanntmachung des Hinweises auf die
Patenterteilung:
**03.11.93 Patentblatt 93/44**

(84) Benannte Vertragsstaaten:
**DE FR GB NL**

(56) Entgegenhaltungen:
**EP-A- 0 027 640**
**EP-A- 0 239 089**
**DE-B- 2 520 030**
**DE-B- 2 648 305**
**GB-A- 1 316 664**

(73) Patentinhaber: **BASF Aktiengesellschaft**
**Carl-Bosch-Strasse 38**
**D-67063 Ludwigshafen(DE)**

(72) Erfinder: **Meyer, Bernd, Dr.**
**Weschnitzaeckerstrasse 8**
**D-6942 Moerlenbach(DE)**
Erfinder: **Steck, Werner, Dr.**
**Auerstrasse 4**
**D-6700 Ludwigshafen(DE)**
Erfinder: **Boettcher, Bernhard, Dr.**
**Im Langen Tal 13 a**
**D-6719 Weisenheim(DE)**
Erfinder: **Jakusch, Helmut, Dr.**
**Lorscher Ring 6 c**
**D-6710 Frankenthal(DE)**
Erfinder: **Feser, Rainer, Dr.**
**Colgensteiner Weg 25**
**D-6718 Grünstadt(DE)**

**Beschreibung**

Die Erfindung betrifft ein Verfahren zur Herstellung von modifiziertem, ferromagnetischem Chromdioxid durch thermische Zersetzung von hydratisierten Chrom(III)chromaten unter erhöhtem Druck.

Die Herstellung von nadelförmigem Chromdioxid und die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften, welche auf die hohen Werte bei der Koerzitivfeldstärke, der spezifischen remanenten Magnetisierung und Sättigungsmagnetisierung sowie insbesondere auf die einheitliche Form und die geringen Abmessungen der nadelförmigen Chromdioxid-Teilchen zurückzuführen sind.

Neben der Synthese des Chromdioxids durch eine unter hydrothermalen Bedingungen ablaufenden Synproportionierung aus Chrom(III)- und Chrom(VI)oxiden ist auch die Herstellung von nadelförmigem Chromdioxid durch thermische Zersetzung von hydratisiertem Chrom(III)chromat bekannt. So wird in der DE-A 22 10 059 ein Verfahren beschrieben, bei dem $Cr_2(CrO_4)_3 \cdot nH_2O$, worin n 1 bis 8 bedeutet, bei Temperaturen zwischen 250 und 500°C und unter Drücken zwischen 30 und 1000 bar zum Chromdioxid zersetzt wird. Das dabei entstehende Produkt weist eine für die inzwischen üblichen Aufzeichnungsmedien zu geringe Koerzitivfeldstärke auf, welche bei den höheren Werten für n sogar noch weiter abfällt. Für den Fall, daß die Werte für n größer als 8 sind, verringert sich durch das dann gleichzeitig entstehende CrOOH auch noch die remanente Magnetisierung und die Sättigungsmagnetisierung. Eine Verbesserung der magnetischen Eigenschaften läßt sich mit einem Verfahren gemäß der DE-A 23 32 854 erreichen, bei dem eine unter den gegebenen Reaktionsbedingungen sich exotherm zersetzende Substanz dem Chrom(III)-chromat beigemischt wird. Auch die Modifizierung des Chromdioxids mit Lanthan, Yttrium, Barium oder Strontium soll, wie in der DE-A 29 19 572 angegeben, eine Anhebung der magnetischen Kenndaten bewirken. Des weiteren läßt sich modifiziertes Chromdioxid ebenfalls aus Chrom(III)chromaten mit einem höheren Wassergehalt (Hydratationsgrad n 8 bis 12) herstellen (DE-B 25 20 030 und DE-B 26 48 305).

Allen diesen Verfahren zur Chromdioxid-Herstellung aus Chrom(III)chromaten ist gemeinsam, daß zur Vermeidung eines durch die CrOOH-Bildung verursachten Abfalls der Sättigungsmagnetisierung nur relativ wasserarme Chrom(III)chromate mit einem Hydratationsgrad n von höchstens 12 eingesetzt werden können. Die wasserarmen Produkte sind weitgehend pulverförmig.

Angaben über die Darstellungsmöglichkeiten von wasserhaltigen Chrom(III)chromaten enthält "Gmelins Handbuch der anorganischen Chemie", Verlag Chemie (1962), 8. Auflage - Chrom, Teil B, Seiten 104/105. Wegen ihrer Wasserlöslichkeit können diese Präparate nicht gefällt werden und sind daher nur durch Eindampfen ihrer wäßrigen Lösung zugänglich. Die bisher zur Chromdioxid-Herstellung verwendeten Chrom(III)chromate mit einem Wert für n von höchstens 12 werden durch Reduktion einer $CrO_3$-Lösung mit einer stöchiometrischen Menge einer leicht oxidierbaren organischen Verbindung, wie z.B. Methanol, gemäß dem folgenden Reaktionsschema

$$5\ CrO_3\ +\ CH_3OH \rightarrow Cr_2(CrO_4)_3\ +\ 2\ H_2O\ +\ CO_2$$

und nach anschließendem Eindampfen und Trocknen der Chrom(III)chromatlösung auf den gewünschten Wassergehalt erhalten. Eine solche Entwässerung ist aber sehr aufwendig. Es wird nicht nur eine erhebliche Menge an Wärmeenergie verbraucht, es werden auch noch relativ aufwendige Trocknungsvorrichtungen benötigt. Zudem erfordert der Umgang mit festem Chrom(III)chromat einen erhöhten sicherheitstechnischen Aufwand, wie z.B. die Kapselung der Apparaturen oder Anbringung von Absaugvorrichtungen.

Aufgabe der Erfindung war es somit, ein kostengünstiges Verfahren zur Herstellung von hochkoerzitivem, feinteiligem Chromdioxid mit gleichzeitig hohen Werten der Sättigungsmagnetisierung bereitzustellen, das von wasserhaltigen Chrom(III)chromaten ausgeht und nicht den Umgang mit pulvrigem Chrom(III)-chromat erforderlich macht.

Es wurde nun gefunden, daß bei einem Verfahren zur Herstellung von modifiziertem, ferromagnetischem Chromdioxid durch Zersetzung eines wasserhaltigen Chrom(III)chromats der Formel $Cr_2(CrO_4)_3 \cdot nH_2O$ bei Temperaturen von 200 bis 500°C und unter einem Druck von 50 bis 700 bar die gestellte Aufgabe gelöst werden kann, wenn das Chrom(III)chromat einen Hydratationsgrad n von mindestens 13 und vorzugsweise von 14 bis 20 aufweist.

Das erfindungsgemäße Verfahren läßt sich besonders vorteilhaft durchführen, wenn das Chrom(III)-chromat mit einem Hydratationsgrad n von mindestens 13 nicht nach dem Stand der Technik mittels Eindampfen hergestellt wird, sondern das Chrom(VI)oxid ($CrO_3$) nur mit soviel Wasser versetzt wird, daß nach der partiellen Reduktion des $CrO_3$ mit organischem Material der für das erfindungsgemäße Verfahren erforderliche Wassergehalt des Chrom(III)chromats sich einstellt, wobei die bei der Reduktion sich bildende Wassermenge zu berücksichtigen ist.

Da bei der Herstellung der wasserreichen Chrom(III)chromate das $CrO_3$ meist nicht mit einer zur vollständigen Auflösung ausreichenden Wassermenge versetzt wird, ist es von Vorteil, die $CrO_3/H_2O$-Ausgangssuspension zusammen mit den Modifizierungsmitteln einer intensiven Dispergierung, z.B. mit einer Kotthoff-Mischsirene zu unterziehen. Die Reduktion des $CrO_3$ ist mit einer starken Wärmetönung verbunden. Um zu verhindern, daß sich die Reaktionssuspension dabei zu stark erwärmt, empfiehlt es sich, das Reaktionsgefäß bei der Reduktion zu kühlen. Zur Abmilderung der meist heftigen Reaktion zwischen organischem Material und $CrO_3$ hat es sich als günstig erwiesen, das Reduktionsmittel mit Wasser zu verdünnen. Um bei diesem Vorgehen jedoch nicht den Gesamtwassergehalt des Chrom(III)chromats zu verändern, muß die zum Anlösen des $CrO_3$ herangezogene Wassermenge um die zur Verdünnung des Reduktionsmittels verwendete Wassermenge verringert werden. Am günstigsten erwies es sich, von den n Molen $H_2O$ des $Cr_2(CrO_4)_3 \cdot n\,H_2O$ vier Mol zur Verdünnung des Reduktionsmittels und die restlichen (n-4) Mole zur Herstellung der $CrO_3$-Suspension zu verwenden.

Als Reduktionsmittel für die Chrom(III)chromat-Darstellung können alle gängigen Reduktionsmittel verwendet werden, bevorzugt werden jedoch leicht oxidierbare organische Verbindungen wie Alkohole und Aldehyde, insbesondere weniger flüchtige mehrwertige Alkohole wie Glykol oder Glycerin. Das $Cr^{6+}/Cr^{3+}$-Molverhältnis im Chrom(III)chromat sollte nach Möglichkeit 1,5 betragen, es kann auch mit einem $Cr^{6+}$-Über- oder Unterschuß gearbeitet werden.

Im Rahmen des erfindungsgemäßen Verfahrens werden modifizierte Chromdioxid-Materialien hergestellt, wobei es angebracht ist, die bekannten Modifizierungsmittel, wie Antimon, Tellur, Eisen und/oder deren Verbindungen sowie Kombinationen dieser Stoffe, einzusetzen. Üblicherweise eignen sich besonders Kombinationen von Telluroxid und Eisenoxid. Damit lassen sich in überraschender Weise Chromdioxid-Materialien mit Koerzitivfeldstärken bis 60 kA/m erhalten, während entsprechend modifizierte und nach dem Stand der Technik (DE-B 26 48 305) hergestellte nur Werte bis 48 kA/m ergeben. Auch mit der bekannten Zugabe von Mischungen aus Eisenoxid und Kaliumantimonyltartrat gemäß der EP-B 198 110 ergeben sich hohe Werte für die Koerzitivfeldstärke. Die Modifizierungsmittel werden in Mengen zwischen 0,05 und 10 Gew.% berechnet als Oxid, bezogen auf das resultierende Chromdioxid eingesetzt. Nach Möglichkeit sollten die Modifizierungsstoffe bereits vor der Reduktionsmittelzugabe in die $CrO_3$-Suspension eingeführt werden.

Die Durchführung des erfindungsgemäßen Verfahrens erfolgt beispielsweise derart, daß das $CrO_3$ mit weniger Wasser versetzt wird, als zur Einstellung des vorgegebenen Hydratationsgrads beim Chrom(III)chromat von mindestens 13 erforderlich ist. Nach Zugabe der Modifizierungsmittel in die zähe Masse wird die Mischung mit geeigneten Vorrichtungen intensiv dispergiert. Anschließend wird die resultierende Suspension in einem mit Tropftrichter und Rückflußkühlung versehenen, von außen kühlbaren Rührbehälter unter guter Durchmischung durch langsame Zugabe eines mit der restlichen, zur Einstellung des endgültigen Wassergehalts des Chrom(III)chromats erforderlichen Wassermenge versetzten organischen Reduktionsmittels, z.B. Glycerin, reduziert. Das entstehende pastöse Chrom(III)chromat wird in einen Reaktionsbecher aus Edelstahl überführt und anschließend in einem Hochdruckreaktor bei einem Druck zwischen 50 bis 700 bar und einer Temperatur zwischen 200 bis 500 °C zu Chromdioxid umgesetzt. Das Chromdioxid wird aus dem Reaktionsbecher mechanisch entfernt und aufgemahlen.

Zur weiteren Verbesserung der synthetisierten Chromdioxide ist die thermische Nachbehandlung unter oxidativen Bedingungen bei Temperaturen zwischen 150 und 400 °C bekannt (DE-B 19 05 584). Die Nachbehandlung kann jedoch auch zumindest teilweise bereits im Hochdruckreaktor erfolgen, in dem der Reaktor gegen Ende der Chromdioxid-Synthese entspannt wird, ohne daß jedoch vorher eine wesentliche Abkühlung stattgefunden hat (DE-B 20 45 447). Die Entspannung des Reaktors hat zur Folge, daß das im Reaktor befindliche Wasser weitgehend entweicht und das noch heiße Reaktionsprodukt während der Abkühlphase nach einem längeren Zeitraum einer weitgehend wasserfreien oxidativen Atmosphäre ausgesetzt ist. Gegebenenfalls kann das auf die geschilderte Weise gewonnene Chromdioxid in bekannter Weise noch weiter stabilisiert werden, z.B. durch die oberflächliche Einwirkung von Reduktionsmitteln (DE-B 1 925 541), von Laugen (DE-A 3 600 624) oder durch eine Temperung unter Inertgas (EP-A 29 687).

Mit dem erfindungsgemäßen Verfahren läßt sich zur Herstellung von Chromdioxid ein wasserhaltiges Chrom(III)chromat einsetzen, das aufgrund seines hohen Hydratationsgrades ohne besonderen Eindampfschritt und damit in einfacher Weise erhalten und das, da es in nicht-pulvriger Form vorliegt, ohne erhöhten sicherheitstechnischen Aufwand gehandhabt werden kann. Das so gewonnene Chromdioxid zeichnet sich trotz des aus dem Stand der Technik bekannten nachteiligen Einflußes hoher Wassergehalte des Chrom(III)-chromat-Ausgangsmaterials durch ausgezeichnete magnetische Eigenschaften aus, wodurch es bestens zur Verwendung bei der Herstellung von magnetischen Aufzeichnungsträgern geeignet ist.

Das erfindungsgemäß hergestellte Chromdioxid besteht aus feinteiligen, nadelförmigen Teilchen mit Kristallitgrößen $d_{Kr}$ zwischen 20 und 44 nm. Die Koerzitivfeldstärke $H_c$ erreicht Werte um 60 kA/m. Die spezifische Sättigungsmagnetisierung ($M_s/\rho$) beträgt zwischen 70 und 85 nTm$^3$/g und die Remanenz ($M_r/\rho$) zwischen 40 und 50 nTm$^3$/g. Koerzitivfeldstärke, Sättigungsmagnetisierung und Remanenz wurden mit Hilfe eines Schwingmagnetometers in einem Meßfeld von 160 kA/m bei einer mittleren Stopfdichte $\rho$ = 1,3 g/cm$^3$ bestimmt. Die Ermittlung der Kristallitgröße $d_{Kr}$ erfolgte auf röntgenographischem Wege aus dem (220)-Reflex nach dem in "X-Ray Diffraction-Procedures" von H. D. Klug und L. E. Alexander (John Wiley & Sons Inc. 1954) auf den Seiten 491 ff beschriebenen Verfahren.

Die Erfindung sei anhand der folgenden Beispiele näher erläutert.

Beispiel 1

1,5 kg $CrO_3$ wurden in einem zunächst oben offenen Rührbehälter aus Glas mit 663,4 g Wasser versetzt und 20 Minuten mit einer Kotthoff-Mischsirene mit 1430 Umdrehungen/min dispergiert. Die vorgelegte Wassermenge reichte für eine vollständige Auflösung des $CrO_3$ nicht aus. Nach Entfernung des Dispergiergerätes wurden 4,41 g $TeO_2$ ($\triangleq$ 0,35 Gew.% bezogen auf das sich bildende $CrO_2$) und 8,83 g $Fe_2O_3$ ($\triangleq$ 0,7 Gew.%) in die Suspension gegeben und das Reaktionsgefäß mit einem mit Rückflußkühler und Tropftrichter versehenen Deckel verschlossen. Das Reaktionsgefäß wurde zudem mit einem, von einem starken Motor angetriebenen Ankerrührer ausgestattet. Unter Rückflußkühlung, Eiskühlung der Reaktorwand sowie Rühren der $CrO_3$-Suspension werden aus dem Tropftrichter in 120 Minuten 118,4 g Glycerin langsam in die Reaktionssuspension eingeleitet. Es resultiert ein Te/Fe-modifiziertes Chrom(III)chromat mit einem $H_2O$-Gehalt n = 14.

Das auf die oben genannte Art gewonnene $Cr_2(CrO_4)_3$ • 14 $H_2O$ wurde in einen zylindrischen Becher aus Edelstahl eingefüllt und in einem Hochdruckreaktor 4 h bei 350°C und einem Druck von etwa 350 bar zu $CrO_2$ umgesetzt. Nach Abkühlen auf Zimmertemperatur wurde der Reaktor entspannt und das gebildete $CrO_2$ mechanisch aus dem Reaktionsbecher ausgeräumt.

Das Reaktionsprodukt (Rohware) hatte eine spezifische Sättigungsmagnetisierung $M_s/\rho$ von 57 nTm$^3$/g, eine Remanenz $M_r/\rho$ von 31,3 nTm$^3$/g und eine Koerzitivfeldstärke von 50,3 kA/m. Nach einer einstündigen Temperung in einer Drehkugel bei 270°C an Luft war $M_s/\rho$ auf 78 nTm$^3$/g und $M_r/\rho$ auf 43,3 nTm$^3$/g angestiegen. Die $H_c$ lag bei 47,9 kA/m und die Kristallitgröße $d_{Kr}$ bei 20,0 nm.

Vergleichsversuch 1

1,5 kg $CrO_3$ wurden mit 2,4 l Wasser versetzt und 20 Minuten mit der Kotthoff-Mischsirene bei 1430 Umdrehungen/min dispergiert. Die entstandene $CrO_3$-Lösung wurde mit 0,35 Gew.% $TeO_2$ und 0,7 Gew.% $Fe_2O_3$ versetzt und unter Rühren und Eiskühlung 118,4 g Glycerin zudosiert. Es wurde 5 Minuten nachgerührt, auf 90 bis 95°C aufgeheizt und die Lösung 4 Stunden auf dieser Temperatur gehalten. Die $Cr_2(CrO_4)_3$-Lösung wurde anschließend im Vakuum bei etwa 70°C auf einen Wassergehalt n = 14 gebracht.

Die Umsetzung zu $CrO_2$ sowie die oxidative Nachbehandlung erfolgte auf die in Beispiel 1 beschriebene Weise. Die Pulverdaten des Reaktionsproduktes sind in der Tabelle angegeben.

Beispiel 2

Die $Cr_2(CrO_4)_3$-Darstellung erfolgte wie in Beispiel 1 beschrieben, mit dem Unterschied jedoch, daß die $CrO_3$-Suspension nicht vordispergiert wurde, als Modifizierungsstoffe 0,26 Gew.% $TeO_2$ und 1,3 Gew.% $Fe_2O_3$ eingesetzt wurden und die $CrO_3$-Suspension nach der Reduktionsmittelzugabe noch 4 1/2 Stunden unter Rühren auf einer Temperatur von etwa 90°C gehalten wurde.

Die Umsetzung zu $CrO_2$ sowie die oxidative Nachbehandlung wurde wie in Beispiel 1 beschrieben, durchgeführt. Die Pulverdaten sind in der Tabelle angegeben.

Vergleichsversuch 2

Die $CrO_2$-Synthese wurde wie im Vergleichsversuch 1 beschrieben, durch Eindampfung der $Cr_2(CrO_4)_3$-Lösung auf einen $H_2O$-Gehalt n = 14 durchgeführt, die Modifizierungsstoffmengen entsprachen jedoch denen des Beispiels 2. Die Pulverdaten sind in der Tabelle angegeben.

Beispiel 3

Die Synthese entspricht der des Beispiels 2, mit dem Unterschied, daß ein wasserreicheres Chrom(III)-chromat eingesetzt wurde. Die Ausgangs-$CrO_3$-Suspension wurde durch Vermischen von 1,5 kg $CrO_3$ und 879,4 g $H_2O$ hergestellt, wodurch nach der Reduktion ein Chrom(III)chromat mit einem $H_2O$-Gehalt n = 18 erhalten wurde. Die Pulverdaten sind in der Tabelle angegeben.

Beispiel 4

Als Ausgangsmaterial für die $CrO_2$-Synthese wurde ein Chrom(III)chromat mit gleicher Modifizierung und identischem $H_2O$-Gehalt (n = 14) wie in Beispiel 2 eingesetzt, mit dem Unterschied, daß bei der Chrom(III)chromat-Herstellung nicht alles Wasser in die $CrO_3$-Vorlage gegeben wurde, sondern 4 Mol zur Verdünnung des Glycerins verwendet wurden. Die Pulverdaten sind in der Tabelle angegeben.

Beispiel 5

Die $CrO_2$-Synthese erfolgte gemäß Beispiel 2, mit dem Unterschied, daß Methanol (96 g $CH_3OH$ auf 1,5 kg $CrO_3$) anstelle von Glycerin als Reduktionsmittel verwendet wurde. Die Pulverdaten sind in der Tabelle angegeben.

Beispiel 6

Die $Cr_2(CrO_4)_3 \cdot$ n $H_2O$- und $CrO_2$-Darstellung erfolgt gemäß Beispiel 2. Es wurde jedoch mit einem $H_2O$-Gehalt n = 16 und mit Ethylenglykol (111,73 g auf 1,5 kg $CrO_3$) gearbeitet. Die Pulverdaten sind in der Tabelle angegeben.

Beispiel 7

In der gleichen Apparatur wie in Beispiel 1 beschrieben, wurden 1,5 kg $CrO_3$, 447,5 g $H_2O$, 3,28 g $TeO_2$ ($\hat{=}$ 0,26 Gew.% bezogen auf $CrO_2$) und 45,3 g $\gamma$-$Fe_2O_3$ ($\hat{=}$ 3,6 Gew.%) 20 Minuten mit der Kotthoff-Mischsirene bei 1430 Upm dispergiert. Die Reduktion erfolgte mit verdünntem Glycerin, wobei wie in Beispiel 2 von den insgesamt 14 Mol $H_2O$ des resultierenden $Cr_2(CrO_4)_3 \cdot$ n $H_2O$ 4 Mol $H_2O$ zur Verdünnung des Reduktionsmittels herangezogen wurden. Das noch warme $Cr_2(CrO_4)_3 \cdot$ 14 $H_2O$ wurde in einem Edelstahlbecher gefüllt und in einem Hochdruckreaktor 4 Stunden bei 350°C zu $CrO_2$ umgesetzt. Nach Reaktionsende wurde der sich noch auf einer Betriebstemperatur von 350°C befindliche Reaktor entspannt. Im Gegensatz zu den Produkten aus den vorangehenden Beispielen fand die Abkühlung des $CrO_2$ in einer sauerstoffhaltigen, jedoch weitgehend wasserfreien Umgebung bei Normaldruck statt. Die Pulverdaten des Reaktionsproduktes sind in der Tabelle angegeben.

Beispiel 8

Es wird wie in Beispiel 7 beschrieben verfahren, mit dem Unterschied, daß ein $Cr_2(CrO_4)_3 \cdot$ n $H_2O$ mit n = 18 eingesetzt wurde, wobei von den insgesamt 18 Mol $H_2O$ des $Cr_2(CrO_4)_3 \cdot$ 18 $H_2O$ 8 Mol zur Verdünnung des Reduktionsmittels verwendet wurden. Die Pulverdaten sind in der Tabelle angegeben.

Beispiel 9

Es wurde wie in Beispiel 8 beschrieben verfahren, mit dem Unterschied, daß von den insgesamt 18 Mol $H_2O$ des Chrom(III)chromates nur 2 Mol zur Verdünnung des Reduktionsmittels verwendet wurden und mit einer Modifizierung von 0,4 Gew.% $TeO_2$ und 3,6 % $Fe_2O_3$ gearbeitet wurde. Die Pulverdaten sind in der Tabelle angegeben.

Beispiel 10

Es wurde wie in Beispiel 9 beschrieben verfahren, mit dem Unterschied, daß mit 1 Gew.% $Sb_2O_3$ - (Senarmontit) und 3,6 Gew.% $\gamma$-$Fe_2O_3$ dotiert wurde. Die Pulverdaten sind in der Tabelle angegeben.

Beispiel 11

Es wurde wie in Beispiel 9 beschrieben verfahren, mit dem Unterschied, daß mit einem Chrom(III)-chromat mit einem $H_2O$-Gehalt n = 14, wobei 4 Mol $H_2O$ zur Reduktionsmittelverdünnung herangezogen wurden, gearbeitet und mit 0,8 Gew.% $Sb_2O_3$ (Senarmontit) und 1,3 Gew.% $\gamma$-$Fe_2O_3$ dotiert wurde. Die Pulverdaten sind in der Tabelle angegeben.

Beispiel 12

Es wurde wie in Beispiel 11 beschrieben verfahren, mit dem Unterschied, daß die Antimondotierung mit Kaliumantimonyltartrat vorgenommen wurde. Wegen dessen Gehaltes an organischen Material wurde die zur Chrom(III)chromat-Darstellung eingesetzte Glycerinmenge um einen entsprechenden Betrag verringert. Die Pulverdaten sind in der Tabelle angegeben.

Tabelle

| | H₂O-Gehalt [n] | Rohware Ms/ϱ [nTm³/g] | Rohware Mr/ϱ [nTM³/g] | CrO₂-Pulverdaten H_C [kA/m] | getempertes Produkt Ms/ϱ [nTm³/g] | getempertes Produkt Mr/ϱ [nTm³/g] | getempertes Produkt H_C [kA/m] | getempertes Produkt d_Kr [nm] |
|---|---|---|---|---|---|---|---|---|
| Beispiel 1 | 14 | 57 | 31,3 | 50,3 | 78 | 43,3 | 47,9 | 20,0 |
| Vergl. Vers. 1 | 14 | 58 | 34,3 | 53,8 | 80 | 48,4 | 54,2 | 27,5 |
| Beispiel 2 | 14 | 54 | 30,1 | 49,7 | 79 | 44,2 | 44,8 | 22,0 |
| Vergl. Vers. 2 | 14 | 54 | 32,1 | 56,2 | 75 | 44,9 | 55,4 | 25,5 |
| Beispiel 3 | 18 | 54 | 30,1 | 49,7 | 79 | 44,2 | 44,8 | 35,5 |
| Beispiel 4 | 14 | 53 | 29,2 | 52,4 | 78 | 45,2 | 52,5 | 20,5 |
| Beispiel 5 | 14 | 53 | 30,4 | 54,7 | 84 | 50,1 | 52,0 | 22,5 |
| Beispiel 6 | 16 | 51 | 29,6 | 57 | 75 | 43,9 | 60,4 | 35,0 |
| Beispiel 7 | 14 | 71 | 43,7 | 58,5 | 71 | 43,9 | 60,4 | 25,0 |
| Beispiel 8 | 18 | 73 | 42,3 | 60 | 74 | 42,9 | 59,1 | 28,5 |
| Beispiel 9 | 18 | 72 | 42,2 | 60,2 | 72 | 42,7 | 60 | 28,0 |
| Beispiel 10 | 18 | 74 | 44,1 | 48,2 | 76 | 46,4 | 49,1 | 38,5 |
| Beispiel 11 | 14 | 75 | 42,6 | 36 | 85 | 49,6 | 35,3 | 44,0 |
| Beispiel 12 | 14 | 73 | 43,2 | 55,8 | 76 | 46,2 | 55,7 | 22,0 |

**Patentansprüche**

1.  Verfahren zur Herstellung von modifiziertem, ferromagnetischem Chromdioxid durch Zersetzung eines wasserhaltigen Chrom(III)chromats der Formel $Cr_2(CrO_4)_3 \cdot n\ H_2O$ bei Temperaturen von 200 bis

7

500 °C und unter einem Druck von 50 bis 700 bar, dadurch gekennzeichnet, daß das Chrom(III)chromat einen Hydratationsgrad n von mindestens 13 aufweist.

2. Verfahren gemäß Anspruch 1, dadurch gekennzeichnet, daß der Hydratationsgrad n 14 bis 20 beträgt.

3. Verfahren gemäß Anspruch 1, dadurch gekennzeichnet, daß das Chrom(III)chromat mit einem Hydratationsgrad n von mindestens 13 erhalten wird aus $CrO_3$ durch Zugabe von Wasser in einer dem Hydratationsgrad entsprechenden Menge und anschließende Reduktion zum Chrom(III)chromat mittels organischer Verbindungen.

4. Verfahren gemäß Anspruch 3, dadurch gekennzeichnet, daß das $CrO_3$ mit weniger als der dem Hydratationsgrad entsprechenden Menge Wasser versetzt wird und die restliche Menge Wasser als Verdünnung des für die anschließende Reduktion des $CrO_3$ zum Chrom(III)chromat zugesetzten organischen Reduktionsmittels dient.

5. Verfahren gemäß Anspruch 3, dadurch gekennzeichnet, daß als Reduktionsmittel Ethylenglykol und/oder Glycerin eingesetzt wird.

## Claims

1. A process for the preparation of modified, ferromagnetic chromium dioxide for decomposing a hydrated chromium(III) chromate of the formula $Cr_2(CrO_4)_3 \cdot nH_2O$ at from 200 to 500 °C and from 50 to 700 bar, wherein the chromium(III) chromate has a degree of hydration n of at least 13.

2. A process as claimed in claim 1, wherein the degree of hydration n is from 14 to 20.

3. A process as claimed in claim 1, wherein the chromium(III) chromate having a degree of hydration n of at least 13 is obtained from $CrO_3$ by the addition of water in an amount corresponding to the degree of hydration and subsequent reduction to the chromium(III) chromate by means of organic compounds.

4. A process as claimed in claim 3, wherein less than the amount of water corresponding to the degree of hydration is added to the $CrO_3$, and the remaining amount of water serves for diluting the organic reducing agent added for the subsequent reduction of the $CrO_3$ to the chromium(III) chromate.

5. A process as claimed in claim 3, wherein the reducing agent used is ethylene glycol or glycerol.

## Revendications

1. Procédé de préparation de chromate chromeux ferromagnétique modifié par décomposition d'un chromate de chrome-III hydraté de formule $Cr_2(C_rO_4)_3 \cdot n H_2O$ à des températures de 200 à 500 °C et sous une pression de 50 à 700 bars, caractérisé par le fait que le chromate de chrome-III présente un degré d'hydratation n d'au moins 13.

2. Procédé selon la revendication 1, caractérisé par le fait que le degré d'hydratation n est compris entre 14 et 20.

3. Procédé selon la revendication 1, caractérisé par le fait que le chromate de chrome-III d'un degré d'hydratation n d'au moins 13 est obtenu à partir de $CrO_3$ par addition d'eau en une quantité correspondant au degré d'hydratation et réduction subséquente en chromate de chrome-III au moyen de composés organiques.

4. Procédé selon la revendication 3, caractérisé par le fait que $CrO_3$ est additionné d'eau en une quantité inférieure à celle correspondant au degré d'hydratation et la quantité d'eau restante sert à diluer le réducteur organique ajouté pour la réduction subséquente du $CrO_3$ en chromate de chrome-III.

5. Procédé selon la revendication 3, caractérisé par le fait que l'on ajoute, comme réducteur, de l'éthylèneglycol et/ou du glycérol.